(19) Europäisches Patentamt
European Patent Office
Office européen des brevets

(11) **EP 2 294 483 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
*G03B 21/14* *(2006.01)*    *G03B 21/20* *(2006.01)*
*H04N 5/74* *(2006.01)*    *H04N 9/31* *(2006.01)*

(21) Anmeldenummer: **09768979.8**

(22) Anmeldetag: **23.06.2009**

(86) Internationale Anmeldenummer:
**PCT/EP2009/004531**

(87) Internationale Veröffentlichungsnummer:
**WO 2009/156130 (30.12.2009 Gazette 2009/53)**

(54) **PROJEKTIONSSYSTEM**

PROJECTION SYSTEM

SYSTÈME DE PROJECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.06.2008 DE 102008029785**
**24.06.2008 DE 102008029787**
**24.06.2008 DE 102008029788**
**24.06.2008 DE 102008029789**
**24.06.2008 US 75133 P**

(43) Veröffentlichungstag der Anmeldung:
**16.03.2011 Patentblatt 2011/11**

(73) Patentinhaber: **Carl Zeiss AG**
**73447 Oberkochen (DE)**

(72) Erfinder:
• **GEISSLER, Enrico**
**07749 Jena (DE)**

• **NIETEN, Christoph**
**07743 Jena (DE)**
• **RUDOLPH, Günter**
**07743 Jena (DE)**
• **PRETORIUS, Marco**
**73447 Oberkochen (DE)**

(74) Vertreter: **Geyer, Fehners & Partner**
**Patentanwälte**
**Perhamerstrasse 31**
**80687 München (DE)**

(56) Entgegenhaltungen:
**EP-A- 1 269 756       EP-A- 1 549 056**
**WO-A-2004/102973     FR-A- 2 899 980**
**US-A1- 2003 016 335   US-A1- 2006 055 897**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Projektionssystem gemäß dem Oberbegriff des Anspruches 1. Ein solches Projektionssystem ist beispielsweise aus der EP 1 269 756 und der US 2003/0026335A1 bekannt.

Bei einem solchen Projektionssystem wird durch die optische Hintereinanderschaltung zweier Kippspiegelmatrizen der Vorteil erreicht, daß der Schwarzlichtpegel im projizierten Bild (also die Resthelligkeit eines an sich schwarzen Bildpunktes) im Vergleich zu Projektionssystemen mit nur einer einzigen Kippspiegelmatrix deutlich verringert werden kann.

Jedoch ist es sehr schwierig, die Abbildung der ersten Kippspiegelmatrix auf die zweite Kippspiegelmatrix mittels der Abbildungsoptik in hoher Qualität durchzuführen. Dies liegt insbesondere daran, daß bei Kippspiegelmatrizen die Strahlenbündel des reflektieren Lichtes, das zur Bilderzeugung verwendet wird, nicht senkrecht zur Modulatorfläche verläuft, sondern unter einem durch die Kippstellung der Kippspiegel vorgegebenen Winkel. Auch ein kompakter optischer Aufbau wird dadurch erschwert. Die EP 1 549 056 A2, die FR 2 899 980A1, die WO 2004/102973 A1 und die US 2006/055897 A1 zeigen jeweils ein Projektionssystem, bei dem eine Abbildungsoptik einen ersten Lichtmodulator auf einem zweiten Licht modulator abbilded.

Ausgehend hiervon ist es Aufgabe der Erfindung, das Projektionssystem der eingangs genannten Art so weiterzubilden, daß ein kompakter optischer Aufbau bei gleichzeitig guter Abbildungsqualität realisiert werden kann.

Die Aufgabe wird bei dem Projektionssystem der eingangs genannten Art durch die Merkmale des kennzeichnenden Teils des Anspruchs 1 gelöst.

Durch die gekippte Anordnung der Aperturblende kann die Abbildungsoptik so ausgebildet werden, daß die Abbildungsfehler minimiert werden können.

Unter Strahlengangfaltungen werden hier alle Strahlengangfaltungen verstanden, die keine abbildende Eigenschaft aufweisen. Es handelt sich damit also um Strahlengangfaltungen an ebenen Flächen. Diese dienen zur Erhöhung der Kompaktheit der Vorrichtung, haben aber keinen Einfluß auf die Abbildungsgüte der Abbildungsoptik, so daß die Kippung der Aperturblende auf die Modulatorfläche ohne etwaige Strahlengangfaltungen bezogen ist.

Die Kippspiegel der beiden Kippspiegelmatrizen können insbesondere in eine erste und eine zweite Kippstellung geschaltet bzw. gebracht werden.

Weiterbildungen des erfindungsgemäßen Projektionssystems sind in den abhängigen Ansprüchen angegeben.

Mit der beschriebenen Umlenkoptik kann eine kompakte Ausbildung des entsprechenden Projektionssystems sichergestellt werden. Insbesondere besteht genügend Platz für die notwendige Ansteuerelektronik der Kippspiegelmatrizen, so daß die Ansteuerelektroniken nicht in den Bereich der Abbildungsoptiken, der für die Abbildung benötigt wird, hineinstehen.

Durch die Ausbildung der Abbildungsoptik z.B. gemäß Anspruch 1 oder 3 ist es möglich, die Abbildungsfehler der Abbildungsoptik bei gleichzeitiger Verringerung der Anzahl der Elemente der Abbildungsoptik zu minimieren.

Insbesondere kann die Abbildungsoptik nur die Plankonvex-Linse und die rückseitenverspiegelte Linse aufweisen.

Die rückseitenverspiegelte Linse weist bevorzugt nur sphärische Grenzflächen auf.

Bei der Ausbildung des Projektionssystems gemäß z.B. Anspruch 14 werden die durch die Kippstellungen vorgegebenen Winkel optimal ausgenutzt. Insbesondere ist die Abbildungsoptik leichter zu justieren. Auch kann eine der zweiten Kippspiegelmatrix nachgeordnete Projektionsoptik leichter justiert werden, da das von den sich in der erste Kippstellung befindenden Kippspiegeln reflektierte Licht senkrecht zur Modulatorfläche der zweiten Kippspiegelmatrix verläuft.

Die Abbildungsoptik kann insbesondere als 1:1 Abbildungsoptik ausgebildet sein. Sie kann jedoch auch als vergrößernde oder verkleinernde Abbildungsoptik ausgebildet sein.

Die erfindungsgemäßen Projektionssysteme können insbesondere jeweils als Projektor für Anwendungen in einem Planetarium so ausgebildet sein, daß das zu projizierende Bild auf eine gekrümmte Projektionsfläche projiziert wird. Die gekrümmte Projektionsfläche kann Teil einer Planetariumskuppel sein. Bei dieser Ausbildung erfolgt die Projektion in der Regel im Dunklen, so daß die erreichte Schwarzpegelreduzierung eine deutliche Bildverbesserung mit sich bringt.

Die Projektionssysteme können ferner jeweils als Projektor für die Frontprojektion oder als Projektor für die Rückprojektion ausgebildet sein. Die Projektionsfläche kann Bestandteil des Projektors sein.

Die Abbildungsoptik und/oder die Umlenkoptik kann für das vom Licht durchlaufenden Material ein einziges Material nutzen So können die Linsen der Abbildungsoptik und die Umlenkprismen der Umlenkoptik aus dem gleichen Material hergestellt sein.

Ferner können die Projektionssysteme noch weitere, dem Fachmann bekannte Teile bzw. Module aufweisen, damit das gewünschte Bild projiziert werden kann.

Nachfolgend wird die Erfindung beispielsweise anhand der beigefügten Zeichnungen, die auch erfindungswesentliche Merkmale offenbaren, noch näher erläutert. Es zeigen:

Fig. 1    eine schematische Ansicht einer Ausführungsform des erfindungsgemäßen Projektors;

Fig. 2    eine schematische Darstellung zur Erläuterung der Lichtmodulation mit den beiden Kippspiegelmatrizen 3, 5 des Projektors 1 von Fig 1;

Fig. 3    eine perspektivische Ansicht der Abbildungsoptik 4 des Projektors 1 von Fig. 1;

Fig. 4    eine Draufsicht der Abbildungsoptik 4 des Projektors 1 von Fig. 1;

Fig. 5    eine Seitenansicht der Abbildungsoptik des Projektors 1 von Fig. 1;

Fig. 6    eine schematische Darstellung zur Erläuterung der Lichtmodulation mit den beiden Kippspiegelmatrizen 3, 5 des Projektors 1 von Fig. 3 bis 5;

Fig. 7    eine perspektivische Ansicht des Projektors gemäß Fig. 1 bis 6, wobei für das Strahltrennmodul nur der vom Ein-Licht zu durchlaufende Glasweg als Block dargestellt ist, und

Fig. 8    eine perspektivische Ansicht einer Abwandlung des Projektors in einer Darstellung gemäß Fig. 7.

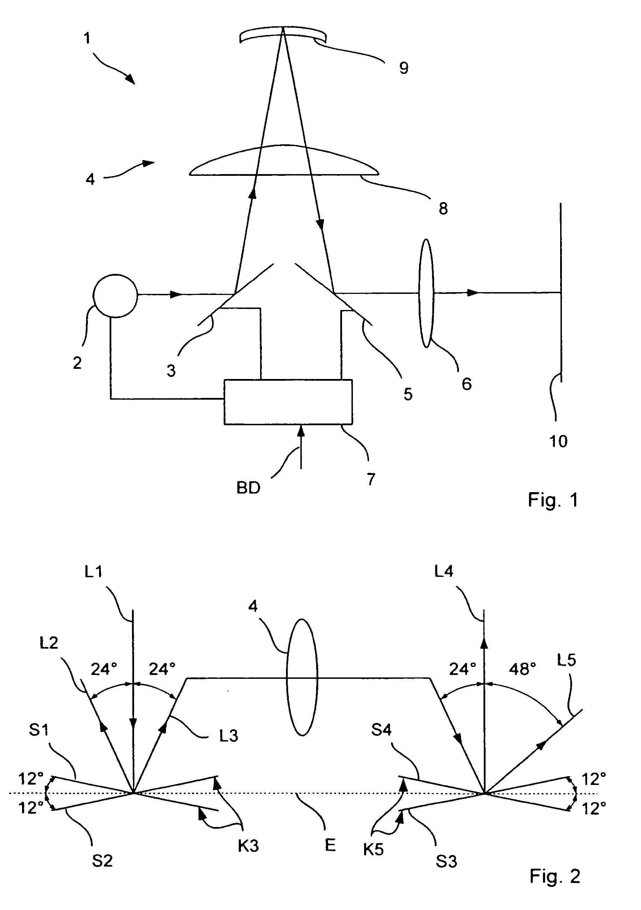

Bei der in Fig. 1 schematisch gezeigten Ausführungsform umfaßt der erfindungsgemäße Projektor 1 zum Projizieren eines Bildes eine Lichtquelle 2, einen Beleuchtungsmodulator 3, eine Abbildungsoptik 4, einen Bildmodulator 5, eine Projektionsoptik 6 sowie eine Steuereinheit 7.

Die beiden Modulatoren 3, 5 sind jeweils als Kippspiegelmatrix ausgebildet, die n x m Kippspiegel in Spalten und Zeilen aufweisen, wobei die Kippspiegel voneinander unabhängig in eine erste und in eine zweite Kippstellung gebracht werden können.

Die Abbildungsoptik 4 ist als 1:1-Abbildungsoptik mit einer ersten Plankonvex-Linse 8 und einer zweiten rückseitenverspiegelten Linse 9 ausgebildet und bildet jeden Kippspiegel des Beleuchtungsmodulators 3 genau auf einen Kippspiegel des Bildmodulators 5 ab, so daß zu jedem Kippspiegel (nachfolgend auch Beleuchtungspixel genannt) des Beleuchtungsmodulators 3 genau ein Kippspiegel (nachfolgend auch Bildpixel genannt) des Bildmodulators 5 zugeordnet ist. Es sind auch andere Zuordnungen von Bild- und Beleuchtungspixeln möglich. So kann z. B. ein Versatz in Zeilenrichtung so bewirkt werden, daß jedes Bildpixel durch zwei Beleuchtungspixel (jeweils zur Hälfte) beleuchtet wird.

Die beiden Modulatoren 3 und 5 werden von der Steuereinheit 7 basierend auf zugeführten Bilddaten BD so angesteuert, daß der Beleuchtungsmodulator 3, der mit dem Licht (z.B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 10 projiziert wird.

Der Beleuchtungsmodulator kann so angesteuert werden, daß nur das von den Kippspiegeln des Beleuchtungsmodulators reflektierte Licht, die einem Kippspiegel des Bildmodulators zugeordnet sind, der eine nicht schwarzen Bildpunkt im Bild erzeugen soll, auf den Bildmodulator 5 abgebildet wird. Dadurch kann erreicht werden, daß Bildpixel des Bildmodulators, die schwarze Bildpunkte darstellen sollen, nicht mit Licht beaufschlagt werden (da die zugeordneten Beleuchtungspixel bzw. das von diesen reflektierte Licht nicht auf dem Bildmodulator abgebildet wird). Dies führt vorteilhaft dazu, daß der Schwarzpegel (also die unerwünschte Resthelligkeit eines schwarzen Bildpunktes im tatsächlich projizierten Bild) deutlich reduziert werden kann.

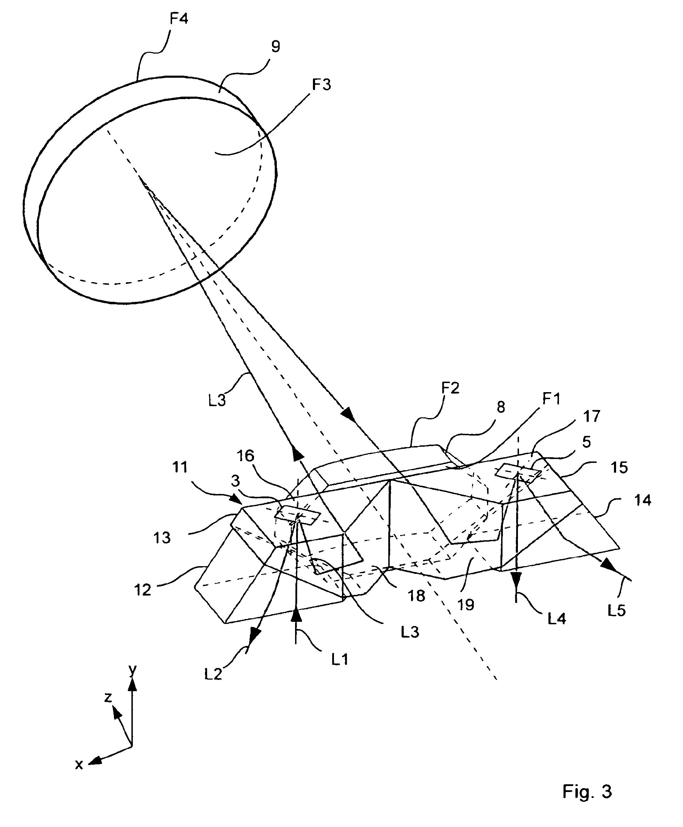

Bevor die in Fig. 3 bis 5 gezeigte konkrete Ausbildung der Abbildungsoptik 4 sowie die Anordnung der beiden Kippspiegelmatrizen 3 und 5 näher beschrieben wird, soll zunächst in Verbindung mit der schematischen Darstellung von Fig. 2 erläutert werden, wie die Lichtmodulation mit den beiden Kippspiegelmatrizen 3 und 5 bewirkt wird.

In Fig. 2 ist stellvertretend für jede Kippspiegelmatrix 3, 5 jeweils nur ein einziger Kippspiegel K3, K5 in seinen beiden möglichen Kippstellungen eingezeichnet. Die Kippspiegel K3 und K5 sind in einer Schnittdarstellung gezeigt, die so gewählt ist, daß die jeweilige Kippachse der beiden Kippspiegel K3 und K5 senkrecht zur Zeichenebene verläuft. Nachdem die beiden Modulatoren 3 und 5 in einer gemeinsamen Ebene E liegen, liegen die Kippachsen der Kippspiegel K3 und K5 in dieser Ebene E, die in der Schnittdarstellung von Fig. 2 als gestrichelte Linie dargestellt ist.

Der Kippspiegel K3 des Modulators 3 kann entweder in seiner ersten Kippstellung S1 oder in einer zweiten Kippstellung S2 stehen. Beide Kippstellungen sind um 12° gegenüber der Ebene E geneigt. In Fig. 2 sind zwar beide Kippstellungen S1 und S2 eingezeichnet. Natürlich kann der Kippspiegel K3 zu einem Zeitpunkt immer nur in einer der beiden Kippstellungen S1, S2 stehen. Gleiches gilt für den Kippspiegel K5 des Bildmodulators 5. Der Kippspiegel K5 kann entweder in seiner ersten Stellung S3 oder in seiner zweiten Stellung S4 stehen.

Im Betrieb des Projektors 1 wird der Kippspiegel K3 mit Licht L1 der Lichtquelle 2 so beaufschlagt, daß das Licht L1 senkrecht zur Ebene E auf den Kippspiegel K3 trifft. Wenn der Kippspiegel K3 in seiner zweiten Stellung S2 steht, wird das Licht, da der Kippspiegel K3 relativ zur Ebene E gegen den Uhrzeigersinn um 12° verkippt ist, unter einem Winkel von 24° zur Einfallsrichtung des Lichtes L1 als sogenanntes Aus-Licht L2 auf eine nicht gezeigte Strahlfalle reflektiert. Dieses Aus-Licht L2 wird nicht zur Beleuchtung des Bildmodulators 5 verwendet.

Wenn jedoch der Kippspiegel K3 in seiner ersten Stellung S1 steht, wird das Licht als sogenanntes Ein-Licht L3 unter einem Winkel von 24° relativ zur Einfallsrichtung des Lichtes L1 reflektiert. Dieses Ein-Licht L3 wird, wie nachfolgend noch detaillierter beschrieben wird, mittels der Abbildungsoptik 4 auf den zugeordneten Kippspiegel K5 des Bildmodulators 5 abgebildet. Die Einfallsrichtung des Ein-Lichtes L3 auf den Kippspiegel K5 ist dabei so gewählt, daß das reflektierte Licht L4, wenn der Kippspiegel K5 in seiner ersten Stellung S3 steht, senkrecht zur Ebene E verläuft. Dazu weist das auf den Kippspiegel K5 einfallende Licht L3 einen Winkel von 24° zum Lot auf die Ebene E auf. Dies führt bei der ersten Kippstellung S3 des Kippspiegels K5 zu der gewünschten Reflexion, so daß das Licht als Ein-Licht L4 mittels der Projektionsoptik 6 auf die Projektionsfläche 10 projiziert werden kann.

Wenn der zweite Kippspiegel K5 in seiner zweiten Kippstellung S4 steht, wird das Licht unter einem Winkel von 48° relativ zum Lot auf die Ebene E als Aus-Licht L5 reflektiert. Dieses Aus-Licht wird in eine Strahlfalle (nicht gezeigt) geleitet und wird bei der Bildprojektion auf die Projektionsfläche 10 nicht verwendet.

In dieser Art und Weise kann mittels der ersten Kippspiegelmatrix 3 die flächig modulierte Lichtquelle bereitgestellt werden, bei der zumindest alle Kippspiegel des Beleuchtungsmodulators 3, die auf einen Kippspiegel des Bildmodulators 5 abgebildet werden, der einen nicht schwarzen Bildpunkt darstellen soll, in die erste Kippstellung gebracht werden. Mittels des Bildmodulators 5 können dann die beleuchteten Kippspiegel K5 so in ihre erste und zweite Kippstellung geschaltet werden, das während der Dauer T einer Einzelbilddarstellung die gewünschte Helligkeit des entsprechenden Bildpunktes erzeugt wird. Die Helligkeit kann durch das Verhältnis der Zeitdauern, während denen der Kippspiegel K5 in seiner ersten Stellung steht und während denen der Kippspiegel K5 in seiner zweiten Stellung steht, eingestellt werden. Die Ansteuerung der beiden Modulatoren erfolgt mit pulsweitenmodulierten Steuerdaten, die die Steuereinheit 7 basierend auf den zugeführten Steuerdaten BD erzeugt.

Wie den Fig. 3 bis 5 zu entnehmen ist, ist zwischen der Abbildungsoptik 4, die die Plankonvexlinse 8 und die rückseitenverspiegelte Linse 9 umfaßt, und den beiden Modulatoren 3, 5 ein Strahltrennmodul 11 (das nachfolgend auch als Umlenkoptik bezeichnet wird) angeordnet, das das von den Modulatoren 3, 5 reflektierte Ein-Licht L3, L4 vom von den Modulatoren 3, 5 reflektierten Aus-Licht L2, L5 trennt. Dazu umfaßt das Strahltrennmodul 11 ein erstes und zweites Prisma 12, 13 für den Beleuchtungsmodulator 3 sowie ein drittes und viertes Prisma 14, 15 für den Bildmodulator 5. Das Strahltrennmodul 11 umfaßt somit eine erste Strahltrenneinheit und eine zweite Strahltrenneinheit, die jeweils zumindest eine Umlenkfläche 18, 19 aufweisen.

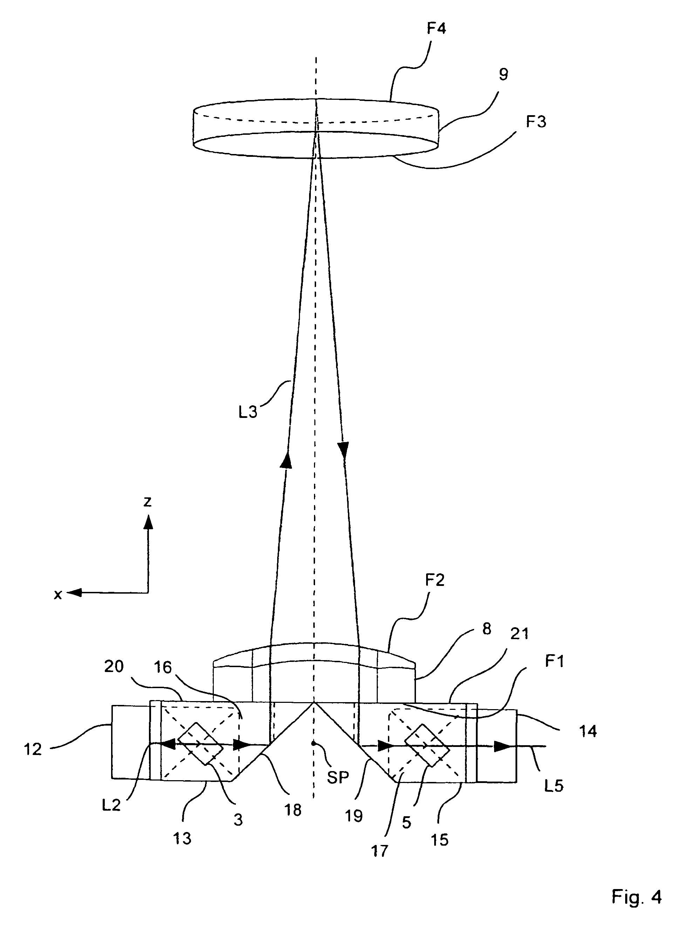

Auf der Oberseite 16, 17 des zweiten und vierten Prismas 13, 15 ist jeweils einer der Modulatoren 3, 5 angeordnet. Die Oberseiten 16, 17 liegen so in der gleichen Ebene, daß die Kippspiegel bzw. die Kippachsen der Kippspiegel der beiden Modulatoren 3, 5 in der gemeinsamen Ebene E liegen. Da die Kippachsen der Kippspiegel diagonal zu dem rechteckigen Bereich, in dem die Kippspiegel in Zeilen und Spalten angeordnet sind, verlaufen, sind die beiden Modulatoren 3, 5 so in der Ebene E gedreht auf den Oberseiten 16 und 17 angeordnet, daß die Kippachsen der Kippspiegel sich in der z-Richtung erstrecken. Ferner sind die beiden Modulatoren 3, 5 zueinander punktsymmetrisch angeordnet, wobei der Symmetriepunkt in Fig. 4 mit SP bezeichnet ist.

Die Prismen 12 und 13, die aus demselben Material bestehen, sind voneinander durch einen dünnen Luftspalt (ca. 3 - 6 μm) getrennt, so daß das Ein-Licht L3 vom Beleuchtungsmodulator 3 aufgrund innerer Totalreflexion an der Grenzfläche des Prismas 13 zum Luftspalt in der xy-Ebene zur rechten Seitenfläche 18 des Prismas 13 reflektiert wird (das vom Beleuchtungsmodulator 3 kommende Ein-Licht L3 und das aufgrund innerer Totalreflexion reflektierte Ein-Licht L3 liegen in der xy-Ebene). Die rechte Seitenfläche 18 ist verspiegelt und relativ zum auf sie fallenden Ein-Licht L3 um 45° geneigt, so daß an der rechten Seite 18 eine 90°-Umlenkung in der xz-Ebene in Richtung zur Abbildungsoptik 4 hin stattfindet.

Das Aus-Licht L2 des Beleuchtungsmodulators 3 wird hingegen nicht an der Grenzfläche des Prismas 13 zum Luftspalt reflektiert, sondern läuft durch diese, den Luftspalt sowie das erste Prisma 12 hindurch und wird dann von einer nicht gezeigten Strahlfalle aufgefangen. Somit wird durch die beiden Prismen 12 und 13 und dem dazwischen vorgesehenen Luftspalt eine Trennung des Ein- und des Aus-Lichtes bewirkt.

Das dritte und vierte Prisma 14, 15 sind im wesentlichen spiegelsymmetrisch relativ zur yz-Ebene zu dem ersten und zweiten Prisma 12, 13 ausgebildet. Auch hier ist wiederum ein dünner Luftspalt zwischen beiden Prismen 14, 15 vorhanden. Wie dem Strahlenverlauf in Fig. 3 zu entnehmen ist, wird das von der Abbildungsoptik 4 kommende Ein-Licht L3 an der linken verspiegelten Seitenfläche 19 des vierten Prismas 15 um 90° in der xz-Ebene reflektiert und dann aufgrund innerer Totalreflexion an der Grenzfläche des vierten Prismas 15 zum Luftspalt in der xy-Ebene nach oben auf den Bildmodulator 5 so reflektiert, daß das Ein-Licht L3 unter einem Winkel von 24° relativ zur Normalen auf die Ebene E auf den Bildmodulator 5 trifft. Das Ein-Licht vom Bildmodulator 5 verläuft senkrecht zur Ebene E in der y-Richtung durch die beiden Prismen 15 und 14 und dem dazwischen liegenden Luftspalt hindurch und wird dann mittels der in den Fig. 3 bis 5 nicht gezeigten Projektionsoptik 6 auf die Projektionsfläche 10 projiziert. Das Aus-Licht L5 wird hingegen unter einem Winkel von 48° relativ zum Lot auf die Ebene E von dem Modulator 5 reflektiert und wird nach Durchlaufen der Prismen 15 und 14 und Luftspalt von einer nicht gezeigten Strahlfalle aufgefangen.

Mittels dem Strahltrennmodul 11 ist eine sehr kompakte Anordnung der beiden Modulatoren 3, 5 möglich. Auch die Strahltrennung von Ein- und Aus-Licht läßt sich leicht verwirklichen, so daß noch ausreichend Platz für z.B. die Projektionsoptik 6 vorhanden ist.

Das Strahlenmodul 11 bzw. zumindest die Prismen 12 und 13 sorgen zusammen mit der Lichtquelle 2 dafür, daß der erste Modulator 3 senkrecht mit dem Licht L1 beleuchtet wird und können daher auch als Beleuchtungsmodul bezeichnet werden.

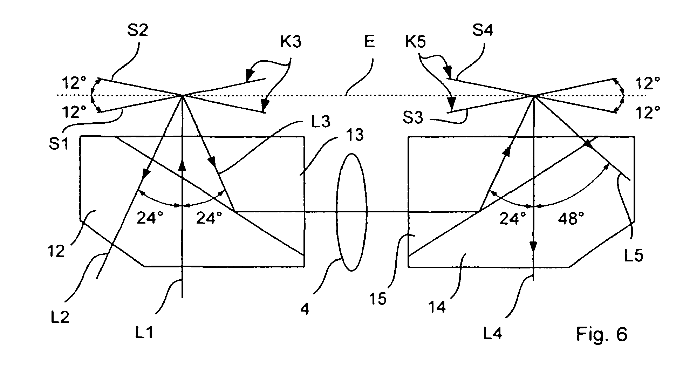

Die Strahltrennung des Ein- und Aus-Lichtes aufgrund des Luftspaltes zwischen den Prismen 12 und 13 sowie zwischen den Prismen 14 und 15 soll anhand der schematischen Darstellung in Fig. 6, die im wesentlichen der Darstellung von Fig. 2 entspricht, nochmals verdeutlicht werden, da in Fig. 6 zusätzlich schematisch die Prismen 12 - 15 eingezeichnet sind. Gleiche Elemente sind mit gleichen Bezugszeichen bezeichnet, wobei in Fig. 6 die Kippspiegel K3 und K5 oberhalb der Prismen 12 - 15 dargestellt sind, wie dies auch in Fig. 3 der Fall ist.

Wie der Darstellung in Fig. 6 zu entnehmen ist, wird nur das Ein-Licht L3 durch innere Totalreflexion zur Abbildungsoptik 4 hin umgelenkt. Das Aus-Licht L2 hingegen läuft durch die Grenzfläche des Prismas 13 zum Luftspalt, durch den Luftspalt sowie durch das Prisma 12 hindurch.

Das Ein-Licht L3 wird mittels der Abbildungsoptik 4 so auf die Grenzfläche des Prismas 15 zum Luftspalt gelenkt, daß das Licht durch innere Totalreflexion auf die zweite Kippspiegelmatrix bzw. den zweiten Bildmodulator 5 trifft. Das Ein-Licht L4, das vom zweiten Modulator 5 reflektiert wird, verläuft dann senkrecht zur Ebene E in der y-Richtung durch die breiten Prismen 15 und 14 sowie den dazwischenliegenden Spalt hindurch, wohingegen das Aus-Licht L5 unter dem Winkel von 48° relativ zum Lot auf die Ebene E vom Modultor 5 reflektiert und nach Durchlaufen der Prismen 15 und 14 und den dazwischen vorliegenden Luftspalt auf eine nicht gezeigte Strahlfalle trifft.

Die Abbildungsoptik 4 ist so ausgelegt, daß sie den maximal möglichen Lichtleitwert der Kippspiegelmatrizen 3, 5 nicht begrenzt. Die numerische Apertur (Sinus des maximalen Öffnungswinkels der Strahlbündel) beträgt in diesem Fall 0,2 und der Winkel zwischen den Hauptstrahlen der Abbildungsbündel und der Modulator-Normalen beträgt 24°. Die Abbildungsoptik 4 ist auf einen nutzbaren Wellenlängenbereich von 400 bis 700 nm ausgelegt.

Die Plankonvexlinse 8 weist eine plane Fläche F1, die mit den ebenfalls planen Rückflächen 20, 21 der Prismen 13, 15, wie am besten in Fig. 4 ersichtlich ist, verkittet ist, und eine konvexe Fläche F2 auf. Die konvexe Fläche F2 ist eine nicht sphärische Fläche, die als einzige Symmetrie eine Spiegelsymmetrie zur yz-Ebene aufweist und die gemäß der nachfolgenden Formel 1

$$z = \frac{(x^2 + y^2)/R}{1 + \sqrt{1 - (1+k) \cdot \dfrac{(x^2 + y^2)}{R^2}}} + \sum_{m,n=1}^{\infty} C_{m,n} \frac{1}{N_{Radius}^{n+m}} x^m y^n \tag{1}$$

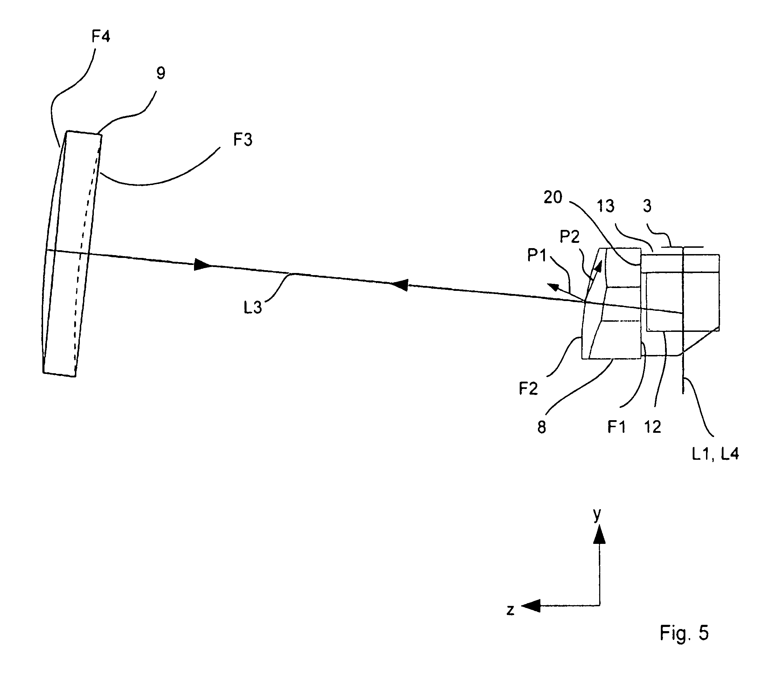

beschrieben werden kann. Hierbei bezeichnen x, y und z die drei kartesischen Koordinaten eines auf der Fläche F2 liegenden Punktes im lokalen flächenbezogenen Koordinatensystem. Das lokale flächenbezogene Koordinatensystem der Fläche F2 und somit die Fläche F2 ist um 22,4° im Uhrzeigersinn (in Fig. 5) um die x-Achse des lokalen flächenbezogenen Koordinatensystems der Rückflächen 20, 21 gedreht, das in den Figuren 3 - 5 eingezeichnet ist. R, k sowie die Koeffizienten $C_{m,n}$ sind in der nachfolgenden Tabelle 1 angegeben. Zur Vereinfachung der Darstellung sind in der Tabelle 1 die Koeffizienten $C_{m,n}$ als C(m,n) bezeichnet.

Tabelle 1

|  | F2 |
| --- | --- |
| k | -8.442E-01 |
| C (0,1) | 1.866E-04 |
| C (2,0) | 1.637E-03 |
| C (0,2) | 1.758E-03 |
| C (2,1) | -1.761E-06 |
| C (0,3) | 1.863E-05 |
| C (4,0) | -1.958E-07 |
| C (2,2) | -6.571 E-07 |
| C (0,4) | 1.625E-06 |
| C (4,1) | 7.519E-10 |
| C (2,3) | -1.323E-08 |

(fortgesetzt)

|  | F2 |
|---|---|
| C (0,5) | 1.103E-07 |
| C (6,0) | -4.091E-11 |
| C (4,2) | 2.570E-11 |
| C (2,4) | -4.287E-10 |
| C (0,5) | 3.789E-09 |
| C (6,1) | 8.301E-13 |
| C (4,3) | -5.581E-12 |
| C (2,5) | -4.830E-12 |
| C (0,7) | 6.987E-11 |
| C (8,0) | 2.748E-15 |
| C (6,2) | 3.199E-14 |
| C (4,4) | 5.573E-14 |
| C (2,6) | -3.490E-14 |
| C (0,8) | 5.242E-13 |
| $N_{Radius}$ | 1.532E+00 |
| R | -110.856 |

Eine ausreichend gute Korrektur aller Bildfehler wird in der Regel erreicht, wenn die Polynomentwicklung der Fläche F2 Terme bis zur maximalen Ordnung $n+m \leq 8$ enthält, wie im vorliegenden Ausführungsbeispiel, wobei aufgrund der Spiegelsymmetrie der Abbildung zur yz-Ebene nur solche Terme in der Entwicklung ungleich Null sind, die zu einer geraden Potenz der x-Koordinate gehören. Natürlich ist es auch möglich Terme bis zur Ordnung $n+m \leq 10$ zu verwenden.

Der Glasweg des Ein-Lichtes L3 von der Oberseite 16 des zweiten Prismas 13 bzw. zur Fläche F2 ist genau so lang wie der Glasweg des an der Spiegelfläche F4 reflektierten Ein-Lichtes L3 von der Fläche F2 bis zur Oberseite 17 des vierten Prismas 15, nämlich 102,8 mm.

Die zweite Linse 9 ist als außeraxialer Ausschnitt einer Linse mit einer ersten und zweiten sphärischen Grenzfläche ausgebildet, wobei die Fläche F3 ein Ausschnitt der ersten sphärischen Grenzfläche und die Fläche F4 ein Ausschnitt der zweiten sphärischen Grenzfläche ist. Die beiden sphärischen Grenzflächen weisen den gleichen Krümmungsradius von -375,75 mm auf und sind in axialer Richtung um 17,5 mm beabstandet. Die axiale Richtung ist hierbei die z-Richtung des lokalen Koordinatensystems der Fläche F2 vor ihrer Drehung um 22,4°. Der axiale Abstand der lokalen Koordinatenursprünge der Flächen F2 und F3 beträgt 252,61 mm.

Die Aperturblende der Abbildungsoptik 4 wird durch den optisch genutzten Bereich der Spiegelfläche F4 der zweiten Linse 9 gebildet. Der Durchmesser der Spiegelfläche F4 (=Aperturblende) beträgt 108 mm und der Mittelpunkt der Spiegelfläche F4 ist gegenüber dem lokalen Koordinatenursprung der zweiten sphärischen Grenzfläche versetzt und gekippt.

Der Rand des optischen genutzten Bereiches der Spiegelfläche F4 liegt hier in einer Ebene, die daher auch als Aperturblendenebene bezeichnet werden kann. Die Aperturblendenebene schließt mit der Normalen der Ebene, in der die Kippachsen der Kippspiegel des ersten Modulators 3 liegen, ohne die Strahlengangfaltungen durch das Prisma 13, ein Winkel von ungleich 90° ein.

Da ein außeraxialer Ausschnitt der durch die beiden sphärischen Grenzflächen bestimmten Linse die Glaslinse 9 bildet, weist die Glastinse 9 eine leicht keilförmige Ausbildung auf.

Die beiden Linsen 8, 9 und die Prismen 12 bis 15 sind aus dem gleichen Material gebildet. Hier wird das Material BK7 mit einer Abbe-Zahl von 64,17 und einer Brechzahl von 1,5168 bei 587,6 nm verwendet.

Um vom Ursprungspunkt des lokalen Koordinatensystems der Fläche F2 zum Mittelpunkt der Fläche F3 zu gelangen, muß man den Ursprungspunkt entlang der z-Richtung (als Pfeil P1 in Fig. 5 schematisch eingezeichnet) des lokalen Koordinatensystems der Fläche F2 um 238,17 mm und dann um -103,16 mm entlang der y-Richtung (als Pfeil P2 in Fig. 5 angedeutet) des lokalen Koordinatensystems der Fläche F2 verschieben. Dann erfolgt noch eine Verkippung um 15,94° (also gegen den Uhrzeigersinn in Fig. 5) um die x-Achse des lokalen Koordinatensystems der Fläche F2.

In gleicher Weise kann die Position des Mittelpunkts der Fläche F4 relativ zum lokalen Koordinatensystem der Fläche F2 angegeben werden. Es findet eine Verschiebung in der z-Richtung um 254,26 mm, in der y-Richtung um -107,99 mm mit einer anschließenden Verkippung um die x-Achse des lokalen Koordinatensystems der Fläche F2 um 16,7° statt.

Durch diese Ausbildung der Abbildungsoptik ist die Spiegelfläche F4 und somit die Aperturblende der Abbildungsoptik 4 gegenüber der Modulatorfläche (= Fläche, in der die Kippachsen der Kippspiegel liegen) der Kippspiegelmatrix 3 im entfalteten Zustand des Strahlenganges (also ohne die zwei Strahlengangfaltungen in der Umlenkoptik 11) gekippt. Die z-Achse des lokalen Koordinatensystems der Fläche F4 ist somit nicht parallel zur Normalen der Modulatorfläche der ersten Kippspiegelmatrix 3, sondern schließt mit der Normalen einen Winkel zwischen 0 und 90° ein. Ferner ist die Fläche F4 gegenüber der ersten Kippspiegelmatrix in der yz-Ebene dezentriert. Damit läßt sich eine sehr kompakte Abbildungsoptik mit ausgezeichneten Abbildungseigenschaften erreichen. Und so beträgt die Verzeichnung der Abbildungsoptik 4 an jedem Punkt der zweiten Kippspiegelmatrix 5 weniger als 3 μm und damit weniger als ein Viertel der Breite der Kippspiegel der Kippspiegelmatrix 5.

Die Verkippung der Aperturblende läßt sich auch so beschreiben, daß die Modulatorebene E im entfalteten Zustand nicht parallel ist zu der Ebene, die durch die x- und y-Achse des lokalen Koordinatensystems der Fläche F4 aufgespannt wird, wobei der Mittelpunkt der Fläche F4 Ursprungpunkt des lokalen Koordinatensystems ist. Somit kann mit der erfindungsgemäßen Abbildungsoptik die erste Kippspiegelmatrix 3 auf die zweite Kippspiegelmatrix 4, die in der gleichen Ebene angeordnet sind, unter einem Strahlengangwinkel (Winkel zwischen der Normalen auf die Modulatorfläche und der Hauptstrahlen der zur Zwischenabbildung benutzten Lichtbündel) mit sehr hoher Bildgüte abgebildet werden. Der Strahlengangwinkel kann dem maximalen Kippwinkel der Kippspiegel entsprechen.

Da die Ausdehnungen der Flächen F2 - F4 aus den vorgegebenen Abmessungen des Bildfeldes (Modulatorflächen), der numerischen Apertur und den Konstruktionsdaten der optischen Elemente bestimmt wird, kann eine künstliche Vignettierung der Abbildungsoptik vermieden werden.

Die verkippte Aperturblende bzw. die gekippten Pupillen der Abbildungsoptik 4 führen damit vorteilhaft zu einer Abbildungsoptik 4 mit ausgezeichneten Abbildungseigenschaften.

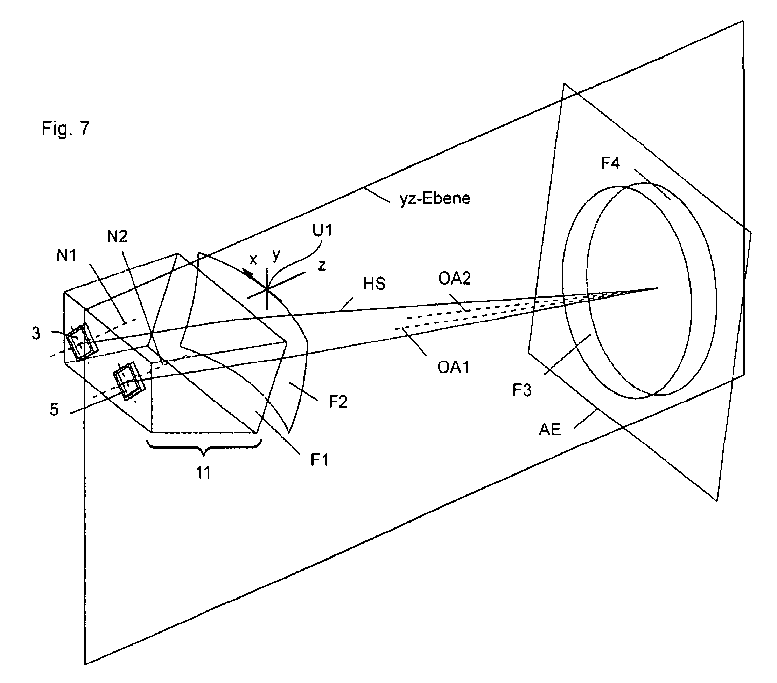

In Fig. 7 ist eine perspektivische Darstellung des Projektors 1 gemäß Fig. 1 bis 6 gezeigt, bei der für das Strahltrennmodul 11 nur der Glasweg (ohne die durchgeführten Strahlengangfaltungen) als Block eingezeichnet ist, den das Ein-Licht L3 durchläuft.

In Fig. 7 sind zu den Modulatorflächen, in denen jeweils die Kippachsen der Kippspiegel der beiden Modulatoren 3, 5 liegen, die Normalen N1 und N2 eingezeichnet. Ferner ist der Koordinatenursprung U1 der Freiformfläche F2 dargestellt und ist die optische Achse OA1 der Fläche F3 und die optische Achse OA2 der reflektiven Fläche F4 eingezeichnet. Aus Fig. 7 ist gut ersichtlich, daß die Aperturblende (optisch genutzter Bereich der Spiegelfläche F4) bzw. die Aperturblendenebene AE, in der der Rand des optisch genutzten Bereichs der Spiegelfläche F4 liegt, gegenüber der Normalen N1 der Modulatorfläche der ersten Kippspiegelmatrix 3 einen Winkel von ungleich 90° einschließt.

Ferner ist in Fig. 7 noch die y-z-Ebene eingezeichnet, zu der die Abbildungsoptik 4 symmetrisch ist.

Zur Freiformfläche F2 ist keine optische Achse eingezeichnet, da eine Freiformfläche im herkömmlichen Sinne keine optische Achse aufweist.

Schließlich ist noch der Hauptstrahl HS des Ein-Lichtes L3, das vom mittleren Feldpunkt des Modultors 3 ausgeht, in Fig. 7 eingezeichnet.

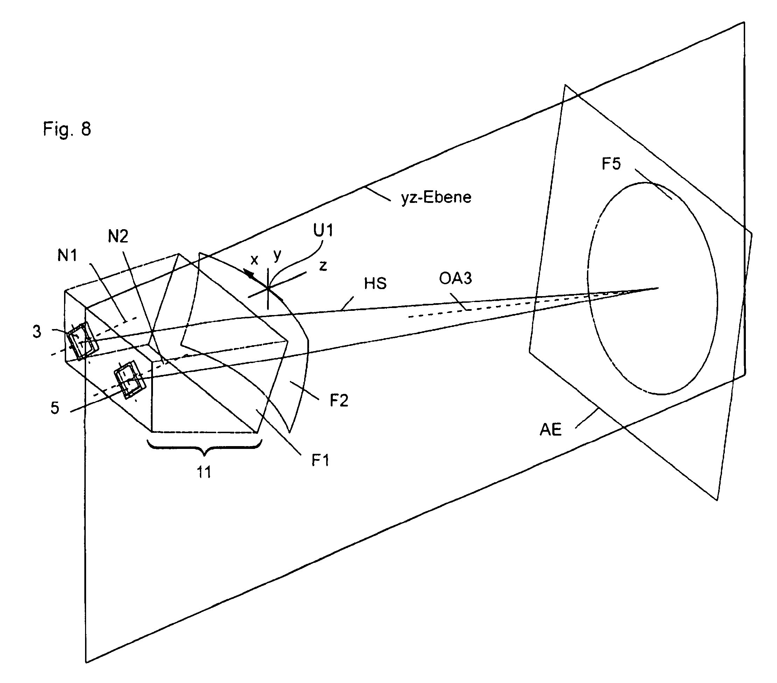

In Fig. 8 ist eine Abwandlung des erfindungsgemäßen Projektors 1 in gleicher Weise wie in Fig. 6 gezeigt, wobei gleiche bzw. ähnliche Elemente mit gleichen Bezugszeichen bezeichnet sind. Im Unterschied zum Projektor 1 gemäß Figuren 1 - 7 weist die Abbildungsoptik 4 beim Projektor 1 gemäß Fig. 8 keine rückseitenverspiegelte Linsen auf, sondern nur eine gekrümmte Spiegelfläche F5 (Abbildungsspiegel) mit einer optischen Achse OA3. Auch hier ist der Winkel zwischen der Aperturblende (Abbildungsspiegel F5) und der Normalen N1 ungleich 90°.

Bei der bisherigen Beschreibung wird davon ausgegangen, daß der Beleuchtungsmodulator 3 mit weißem Licht beaufschlagt wird. Jedoch ist es auch möglich, daß die Lichtquelle 2 farbiges Licht abgibt. Insbesondere kann sie zeitsequentiell verschiedenfarbiges Licht abgeben, wie z. B. rotes, grünes und blaues Licht. Dann kann in der dem Fachmann bekannten Weise ein mehrfarbiges Bild durch die zeitsequentielle Darstellung von roten, grünen und blauen Teilfarbbildern erzeugt werden. Es muß lediglich der Farbwechsel so schnell durchgeführt werden, daß ein Betrachter die zeitlich nacheinander projizierten Teilfarbbilder nicht mehr trennen kann, so daß der Betrachter nur die Überlagerung und somit das mehrfarbige Bild wahrnehmen kann.

Die zeitsequentielle Erzeugung des unterschiedlich farbigen Beleuchtungslichtes kann in üblicher Art und Weise durchgeführt werden, beispielsweise mittels einem Farbrad (nicht eingezeichnet) zwischen der Lichtquelle 2 und dem Beleuchtungsmodulator 3.

Natürlich ist es auch möglich, statt nur eines Beleuchtungsmodulators drei Beleuchtungsmodulatoren 3 vorzusehen, die gleichzeitig mit roten, grünen oder blauen Licht beaufschlagt werden. Das rote, grüne und blaue Ein-Licht der drei Modulatoren wird dann überlagert und das überlagerte Ein-Licht wird mittels der Abbildungsoptik 4 farbselektiv auf drei Bildmodulatoren 5 abgebildet. Die Bildmodulatoren modulieren das jeweilige Farbteilbild, das wiederum überlagert und dann mittels der Abbildungsoptik 6 auf die Projektionsfläche 10 projiziert wird.

Die Überlagerung und Farbtrennung kann mittels dichroitischen Schichten durchgeführt werden. Diese Ausführungsform mit sechs Modulatoren ist natürlich deutlich aufwendiger als die beschriebene Ausführungsform in Verbindung mit Fig. 1 bis 7. Jedoch kann mit einer solchen Ausführungsform ein helleres Farbbild erzeugt werden.

**Patentansprüche**

1.  Projektionssystem mit
    einer ersten Kippspiegelmatrix (3),
    einer zweiten Kippspiegelmatrix (5) und
    einer Abbildungsoptik (4), die die erste Kippspiegelmatrix (3) auf die zweite Kippspiegelmatrix (5) abbildet,
    wobei jede Kippspiegelmatrix (3, 5) jeweils mehrere Kippspiegel aufweist, deren Kippachsen in einer Modulatorfläche liegen,
    **dadurch gekennzeichnet, daß**
    die Abbildungsoptik eine erste Linse sowie einen Abbildungsspiegel umfaßt, daß der Abbildungsspiegel eine Aperturblende der Abbildungsoptik (4) bildet, wobei die Aperturblende mit der Normalen der Modulatorfläche der ersten Kippspiegelmatrix (3) ohne etwaige Strahlengangfaltungen einen Winkel von ungleich 90° einschließt,
    und daß die erste Linse (8) als Plankonvex-Linse (8) und der Abbildungsspiegel als rückseitenverspiegelte zweite Linse (9) ausgebildet ist, wobei die konvexe Seite der ersten Linse (8) als asphärische Fläche (F2) ausgebildet ist, die genan eine Spiegelsymmetrieebene aufweist, und mit der Normalen der Modulatorfläche der ersten Kippspiegelmatrix (3) ohne etwaige Strahlengangfaltungen einen Winkel von ungleich 90° einschließt.

2.  Projektionssystem nach Anspruch 1, **dadurch gekennzeichnet, daß** die Aperturblende zur durch die Mitte der Modulatorfläche der ersten Kippspiegelmatrix (3) gehenden Normalen ohne etwaige Strahlengangfaltungen versetzt angeordnet ist.

3.  Projektionssystem nach Anspruch 1 oder 2, **dadurch gekennzeichnet, daß** die konvexe Seite (F2) der ersten Linse (8) gegenüber der planen Seite (F1) der ersten Linse (8) gekippt ist.

4.  Projektionssystem nach Anspruch 3, **dadurch gekennzeichnet, daß** die Abbildungsoptik (4) genau eine Spiegelsymmetrieebene aufweist.

5.  Projektionssystem nach Anspruch 4, **dadurch gekennzeichnet, daß** die Modulatorflächen der beiden Kippspiegelmatrizen (3,5) symmetrisch zur Spiegelsymmetrieebene angeordnet sind.

6.  Projektionssystem nach einem der obigen Ansprüche, **dadurch gekennzeichnet, daß** die Modulatorfläche der ersten Kippspiegelmatrix (3) in einer Modulatorebene (E) und die Modulatorfläche der zweiten Kippspiegelmatrix (5) in der Modulatorebene (E) oder einer dazu parallelen Ebene angeordnet ist und daß zwischen den Kippspiegelmatrizen (3, 5) einerseits und der Abbildungsoptik (4) andererseits eine Umlenkoptik (11) angeordnet ist, die den Strahlengang zwischen der Abbildungsoptik (4) und der jeweiligen Kippspiegelmatrix (3, 5) zumindest einmal faltet.

7.  Projektionssystem nach Anspruch 6, **dadurch gekennzeichnet, daß** die Umlenkoptik (11) die zumindest eine Strahlengangfaltung zwischen der ersten Kippspiegelmatrix (3) und der Abbildungsoptik (4) durch innere Totalreflexion bewirkt.

8.  Projektionssystem nach Anspruch 6 oder 7, **dadurch gekennzeichnet, daß** die Umlenkoptik (11) die zumindest eine Strahlengangfaltung zwischen der zweiten Kippspiegelmatrix (5) und der Abbildungsoptik (4) durch innere Totalreflexion bewirkt.

9.  Projektionssystem nach einem der Ansprüche 6 bis 8, **dadurch gekennzeichnet, daß** die Umlenkoptik (11) den Strahlengang zwischen der Abbildungsoptik (4) und jeder Kippspiegelmatrix (3, 5) jeweils zweimal faltet.

10. Projektionssystem nach einem der Ansprüche 6 bis 9, **dadurch gekennzeichnet, daß** die Umlenkoptik (11) zu einer Mittelebene senkrecht zur Modulatorebene symmetrisch ausgebildet ist.

11. Projektionssystem nach Anspruch 10, **dadurch gekennzeichnet, daß** die Modulatorfläche der Kippspiegelmatrizen (3, 5) symmetrisch zur Mittelebene angeordnet sind.

12. Projektionssystem nach Anspruch 10 oder 11, **dadurch gekennzeichnet, daß** die Abbildungsoptik (4) symmetrisch zur Mittelebene ausgebildet ist.

13. Projektionssystem nach einem der Ansprüche 6 bis 12, **dadurch gekennzeichnet, daß** die Abbildungsoptik eine erste Linse, die als Plankonvex-Linse (8) ausgebildet ist, und eine zweite Linse (9), die als rückseitenverspiegelte Linse (9) ausgebildet ist, umfaßt, wobei die plane Seite der ersten Linse mit der Umlenkoptik (11) verkittet ist.

14. Projektionssystem nach einem der obigen Ansprüche, **dadurch gekennzeichnet,**
**daß** die Kippspiegel jeweils in eine erste und eine zweite Kippstellung schaltbar sind,
**daß** ein Beleuchtungsmodul vorgesehen ist, das die erste Kippspiegelmatrix (3) so mit Licht beleuchtet, daß die Lichtbeaufschlagung senkrecht zur Modulatorfläche der ersten Kippspiegelmatrix (3) erfolgt, und
**daß** die Abbildungsoptik (4) das von den sich in der ersten Kippstellung befindenden Kippspiegeln der ersten Kippspiegelmatrix reflektierte Licht unter einem solchen Winkel auf die zweite Kippspiegelmatrix (5) abbildet, daß das von den sich in der ersten Kippstellung befindenden Kippspiegeln der zweiten Kippspiegelmatrix (5) reflektierte Licht senkrecht zur Modulatorfläche der zweiten Kippspiegelmatrix (5) verläuft.

**Claims**

1. Projection system with
a first tilting mirror matrix (3),
a second tilting mirror matrix (5) and
imaging optics (4) which image the first tilting mirror matrix (3) onto the second tilting mirror matrix (5), wherein every tilting mirror matrix (3, 5) has several tilting mirrors each the tilting axes of which lie in a modulator surface,
**characterized in that**
the imaging optics comprise a first lens as well as an imaging mirror, the imaging mirror forms an aperture stop of the imaging optics (4), wherein the aperture stop forms an angle other than 90° with the normal of the modulator surface of the first tilting mirror matrix (3) without possible foldings of the beam path,
and **in that** the first lens (8) is designed as a plano-convex lens (8) and the imaging mirror is formed as a second lens (9), which is designed as lens (9) metallized on the back, wherein the convex side of the first lens (8) is formed as aspheric surface which has precisely one plane of mirror symmetry and forms an angle other than 90° with the normal of the modulator surface of the first tilting mirror matrix (3) without possible foldings of the beam path.

2. Projection system according to claim 1, **characterized in that** the aperture stop is arranged offset to the normal passing through the centre of the modulator surface of the first tilting mirror matrix (3) without possible foldings of the beam path.

3. Projection system according to claim 1 or 2, **characterized in that** the convex side (F2) of the first lens (8) is tilted relative to the flat side (F1) of the first lens (8).

4. Projection system according to claim 3, **characterized in that** the imaging optics (4) have precisely one plane of mirror symmetry.

5. Projection system according to claim 4, **characterized in that** the modulator surfaces of the two tilting mirror matrices (3, 5) are arranged symmetrical to the plane of mirror symmetry.

6. Projection system according to one of the previous claims, **characterized in that** the modulator surface of the first tilting mirror matrix (3) is arranged in a modulator plane (E) and the modulator surface of the second tilting mirror matrix (5) is arranged in the modulator plane (E) or a plane parallel to it, and **in that** a deflecting optics (11) is arranged between the tilting mirror matrices (3, 5) on the one hand and the imaging optics (4) on the other hand, said deflecting optics folds the beam path between the imaging optics (4) and the respective tilting mirror matrix (3, 5) at least once.

7. Projection system according to claim 6, **characterized in that** the deflecting optics (11) brings about the at least one folding of the beam path between the first tilting mirror matrix (3) and the imaging optics (4) by total internal reflection.

8. Projection system according to claim 6 or 7, **characterized in that** the deflecting optics (11) brings about the at least one folding of the beam path between the second tilting mirror matrix (5) and the imaging optics (4) by total internal reflection.

9. Projection system according to one of claims 6 to 8, **characterized in that** the deflecting optics (11) folds the beam path between the imaging optics (4) and each tilting mirror matrix (3, 5) twice in each case.

10. Projection system according to one of claims 6 to 9, **characterized in that** the deflecting optics (11) is designed symmetrical to a centre plane perpendicular to the modulator plane.

11. Projection system according to claim 10, **characterized in that** the modulator surfaces of the tilting mirror matrices (3, 5) are arranged symmetrical to the centre plane.

12. Projection system according to claim 10 or 11, **characterized in that** the imaging optics (4) are designed symmetrical to the centre plane.

13. Projection system according to one of claims 6 to 12, **characterized in that** the imaging optics comprise a first lens which is designed as a plano-convex lens (8) and a second lens (9) which is designed as a lens (9) metallized on the back, wherein the flat side of the first lens is cemented to the deflecting optics (11).

14. Projection system according to one of the previous claims, **characterized**
**in that** the tilting mirrors can in each case be switched into a first and a second tilting position,
**in that** an illumination module is provided which illuminates the first tilting mirror matrix (3) with light such that the light strikes perpendicular to the modulator surface of the first tilting mirror matrix (3), and
**in that** the imaging optics (4) image the light reflected by the tilting mirrors of the first tilting mirror matrix which are in the first tilting position onto the second tilting mirror matrix (5) at such an angle that the light reflected by the tilting mirrors of the second tilting mirror matrix (5) which are in the first tilting position runs perpendicular to the modulator surface of the second tilting mirror matrix (5).

**Revendications**

1. Système de projection comportant une première matrice à miroir basculant (3), une seconde matrice à miroir basculant (5) et un système optique de représentation (4) qui représente la première matrice à miroir basculant (3) sur la seconde matrice à miroir basculant (5), sachant que chaque matrice à miroir basculant (3, 5) comporte plusieurs miroirs basculants dont les axes de pivotement se trouvent dans une surface du modulateur, **caractérisé en ce que** le système optique de représentation comporte une première lentille ainsi qu'un miroir de représentation, **en ce que** le miroir de représentation définit un diaphragme d'ouverture du système optique de représentation (4), sachant que le diaphragme d'ouverture forme, avec la normale de la surface du modulateur de la première matrice à miroir basculant (3), un angle différent de 90°, sans des éventuels plissements de la trajectoire du rayon, et **en ce que** la première lentille (8) est réalisée sous la forme d'une lentille plane convexe (8) et le miroir de représentation est réalisé sous la forme d'une seconde lentille (9) avec couche réfléchissante sur la face arrière, sachant que le côté convexe de la première lentille (8) est réalisé sous forme de surface asphérique (F2) qui comporte exactement un plan de symétrie bilatérale et définit, avec la normale de la surface du modulateur de la première matrice à miroir basculant (3), un angle différent de 90°, sans des éventuels plissements de la trajectoire du rayon.

2. Système de projection selon la revendication 1, **caractérisé en ce que** le diaphragme d'ouverture est agencé en décalage par rapport à la normale traversant le centre de la surface du modulateur de la première matrice à miroir basculant (3), sans des éventuels plissements de la trajectoire du rayon.

3. Système de projection selon la revendication 1 ou 2, **caractérisé en ce que** le côté convexe (F2) de la première lentille (8) est basculé vers le côté plan (F1) de la première lentille (8).

4. Système de projection selon la revendication 3, **caractérisé en ce que** le système optique de représentation (4) comporte précisément un plan de symétrie bilatérale.

5. Système de projection selon la revendication 4, **caractérisé en ce que** les surfaces du modulateur des deux matrices à miroir basculant (3, 5) sont disposées de manière symétrique par rapport au plan de symétrie bilatérale.

6. Système de projection selon l'une quelconque des revendications ci-dessus, **caractérisé en ce que** la surface du modulateur de la première matrice à miroir basculant (3) est disposée sur un plan du modulateur (E) et la surface du modulateur de la seconde matrice à miroir basculant (5) est disposée sur le plan du modulateur (E) ou un plan parallèle à celui-ci et **en ce que**, entre les matrices à miroir basculant (3, 5) d'une part et le système optique de représentation (4) d'autre part, on a disposé un système optique de déviation (11) qui plisse au moins une fois la trajectoire du rayon entre le système optique de représentation (4) et la matrice à miroir basculant respective (3, 5).

**7.** Système de projection selon la revendication 6, **caractérisé en ce que** le système optique de déviation (11) entraîne un ou plusieurs plissements de la trajectoire du rayon entre la première matrice à miroir basculant (3) et le système optique de représentation (4) par une réflexion totale interne.

**8.** Système de projection selon la revendication 6 ou 7, **caractérisé en ce que** le système optique de déviation (11) entraîne un ou plusieurs plissements de la trajectoire du rayon entre la seconde matrice à miroir basculant (5) et le système optique de représentation (4) par une réflexion totale interne.

**9.** Système de projection selon l'une quelconque des revendications 6 à 8, **caractérisé en ce que** le système optique de déviation (11) plisse deux fois la trajectoire du rayon entre le système optique de représentation (4) et chaque matrice à miroir basculant (3, 5).

**10.** Système de projection selon l'une quelconque des revendications 6 à 9, **caractérisé en ce que** le système optique de déviation (11) est réalisé de manière symétrique à un plan médian, perpendiculairement au plan du modulateur.

**11.** Système de projection selon la revendication 10, **caractérisé en ce que** la surface du modulateur des matrices à miroir basculant (3, 5) est disposée de manière symétrique au plan médian.

**12.** Système de projection selon la revendication 10 ou 11, **caractérisé en ce que** le système optique de représentation (4) est réalisé de manière symétrique au plan médian.

**13.** Système de projection selon l'une quelconque des revendications 6 à 12, **caractérisé en ce que** le système optique de représentation comporte une première lentille qui est réalisée sous forme de lentille plane convexe (8) et une seconde lentille (9) qui est réalisée sous forme de lentille avec couche réfléchissante sur la face arrière (9), le côté plan de la première lentille étant collée au système optique de déviation (11).

**14.** Système de projection selon l'une quelconque des revendications ci-dessus, **caractérisé en ce que** les miroirs basculants peuvent être commutés respectivement dans une première et une seconde position inclinée, **en ce qu'**on a prévu un module d'éclairage qui envoie de la lumière à la première matrice à miroir basculant (3) de telle sorte que l'amenée de lumière se fasse perpendiculairement à la surface du modulateur de la première matrice à miroir basculant (3) et **en ce que** le système optique de représentation (4) représente à un tel angle la lumière réfléchie par les miroirs basculants, de la première matrice à miroir basculant, miroirs se trouvant dans la première position inclinée, sur la seconde matrice à miroir basculant (5), **en ce que** la lumière réfléchie par les miroirs basculants, de la seconde matrice à miroir basculant (5), miroirs se trouvant dans la première position inclinée, s'étend perpendiculairement à la surface du modulateur de la seconde matrice à miroir basculant (5).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1269756 A
- US 20030026335 A1
- EP 1549056 A2

- FR 2899980 A1
- WO 2004102973 A1
- US 2006055897 A1